## Europäisches Patentamt
## European Patent Office
## Office européen des brevets

(11) Veröffentlichungsnummer: **0 144 775 B1**

(12) # EUROPÄISCHE PATENTSCHRIFT

(45) Veröffentlichungstag der Patentschrift:
**10.12.86**

(51) Int. Cl.⁴: **F 16 C 11/06**

(21) Anmeldenummer: **84113414.1**

(22) Anmeldetag: **07.11.84**

(54) **Kugelgelenk.**

(30) Priorität: **15.11.83 DE 8332784 U**

(43) Veröffentlichungstag der Anmeldung:
**19.06.85 Patentblatt 85/25**

(45) Bekanntmachung des Hinweises auf die Patenterteilung:
**10.12.86 Patentblatt 86/50**

(84) Benannte Vertragsstaaten:
**AT BE DE FR GB IT NL SE**

(56) Entgegenhaltungen:
**FR - A - 2 042 263**
**FR - A - 2 365 720**
**US - A - 4 353 660**

(73) Patentinhaber: **TRW Ehrenreich GmbH & Co. KG,
Hansa-Allee 190, D-4000 Düsseldorf 11 (DE)**

(72) Erfinder: **Ito, Eiichi, Am Eisenbrand 20,
D-4005 Meerbusch 1 (DE)**

(74) Vertreter: **Patentanwälte Dipl.-Ing. Alex Stenger
Dipl.-Ing. Wolfram Watzke Dipl.-Ing. Heinz J. Ring,
Kaiser-Friedrich-Ring 70, D-4000 Düsseldorf 11 (DE)**

ACTORUM AG

## Beschreibung

Gegenstand der Erfindung ist ein Kugelgelenk für Kraftfahrzeuge mit einer zwischen einem Gelenkgehäuse und einem Kugelkopf angeordneten Lagerschale, die an einer Stirnseite mit aus einer Anschlagfläche herausragenden, elastisch verformbaren Erhebungen versehen ist.

Aus der DE-C-19 53 116 ist ein Kugelgelenk mit einer einteiligen Gelenkschale bekannt, die an einer Stirnfläche im Abstand voneinander winzige warzen- oder nockenartige Erhebungen von die Fertigungstoleranzen des Gelenkes geringfügig übersteigender Höhe aufweist, welche durch den die Stirnfläche gegen eine Schulterfläche des Gelenkgehäuses pressenden Einspanndruck verformbar sind. Diese bekannten Erhebungen haben die Aufgabe, Fertigungstoleranzen der Gelenkpartner auszugleichen, um unterschiedliche Gängigkeiten der Kugelgelenke zu vermeiden.

Aus der DE-C-10 98 381 ist ein Kugelgelenk mit einer Lagerschale bekannt, die an ihrer dem Gelenkgehäuse zugewendeten Stirnfläche gewellt ist. Diese Wellung soll auch dazu dienen, Fertigungstoleranzen der Gelenkpartner auszugleichen, um unterschiedliche Gängigkeiten der Kugelgelenke zu vermeiden.

Schliesslich ist aus der DE-A-19 32 520 noch ein Kugelgelenk mit einer Lagerschale bekannt, die an ihrer dem Gelenkgehäuse zugewendeten Stirnfläche mit Vorsprüngen in Form von Kreisringsegmenten oder zylindrischer Ansätze versehen ist, um bei gleichem Verschleiss eine Reduzierung der Vorspannung zu vermeiden und zugleich den Einfluss von Fertigungstoleranzen zu mildern.

Davon ausgehend liegt der Erfindung die Aufgabe zugrunde, die bereits bekannten Erhebungen in Form von Warzen, Wellen, Kreisringsegmenten oder zylindrischer Ansätze so auszubilden, dass durch eine elastische Verformung bei der Montage Fertigungstoleranzen der Gelenkpartner ausgeglichen und gleichzeitig eine möglichst gleichmässige Lagerpressung bzw. ein bestimmtes Kipp- oder Drehmoment eingestellt werden kann, ohne die Erhebungen plastisch zu verformen und ihre Elastizität zu beseitigen.

Zur technischen Lösung dieser Aufgabe wird vorgeschlagen, die Erhebungen als radial verlaufende, quaderförmige Rippen auszubilden, die durch an ihre Seitenwände angrenzende Nuten von den Anschlagflächen beabstandet sind, und die Rippen und Nuten so zu bemessen, dass das die Anschlagflächen überragende Volumen jeder Rippe vor der Montage annähernd gleich dem freien Volumen der beiden ihr zugeordneten Nuten ist, so dass die den Anschlagflächen benachbarten Seitenwände der Nuten im montierten Zustand als Stützwände für die elastisch verformten Rippen wirksam sind.

Bei einer praktischen Ausführungsform kann vor der Montage das Volumen der Rippen zu einem Drittel oberhalb und zu zwei Dritteln unterhalb der Ebene der Anschlagfläche liegen, so dass die Rippen im montierten Zustand die Ebene der Anschlagflächen noch mit ca. 10% ihres elastisch verformbaren Volumens überragen.

Bei einem nach dieser technischen Lehre ausgebildeten Kugelgelenk können die Rippen in bekannter Weise dafür ausgenutzt werden, Fertigungstoleranzen des Gelenkgehäuses bei der Montage auszugleichen. Gleichzeitig kann ein vorher bestimmtes und vom jeweiligen Anwendungsfall abhängiges Kipp- oder Drehmoment eingestellt werden. Dabei dienen die zwischen den Rippen und den Anschlagflächen vorgesehenen Nuten dazu, ein Ausweichen des Materials der Rippen im elastisch verformbaren Bereich zu ermöglichen. Wenn die Volumina der Rippen und der ihnen zugeordneten Nuten in der vorgeschlagenen Weise bemessen werden, können sich die Seitenwände der bei der Montage elastisch verformten Rippen in den Nuten an den Seitenwänden abstützen und auch in diese hineinfedern und eine proportionale Federcharakteristik erzeugen. Dabei bleibt die zur Aufrechterhaltung der eingestellten Vorspannung notwendige Elastizität erhalten.

Weitere Einzelheiten und Vorteile des Gegenstandes der Erfindung ergeben sich aus der nachfolgenden Beschreibung der zugehörigen Zeichnungen, in denen eine bevorzugte Ausführungsform eines erfindungsgemässen ausgebildeten Kugelgelenkes schematisch dargestellt worden ist. In den Zeichnungen zeigen:

Fig. 1 ein Kugelgelenk im montierten Zustand und im Längsschnitt;

Fig. 2 dasselbe Kugelgelenk als Sprengbild;

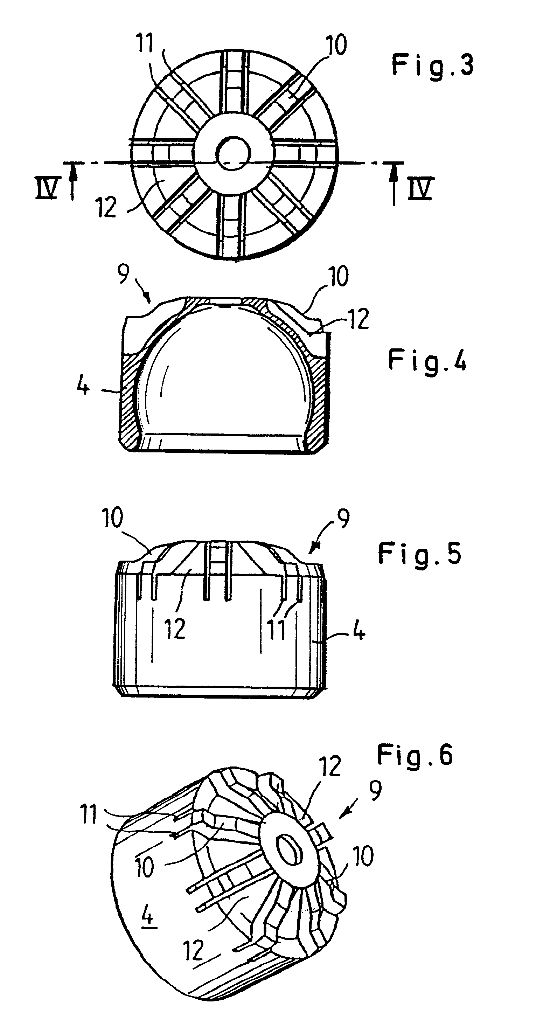

Fig. 3 eine Lagerschale mit elastisch verformbaren Rippen in Draufsicht;

Fig. 4 dieselbe Lagerschale entlang der Linie IV-IV in Fig. 3 geschnitten;

Fig. 5 dieselbe Lagerschale in Seitenansicht;

Fig. 6 dieselbe Lagerschale in perspektivischer Darstellung;

Fig. 7 einen Abschnitt einer Abwicklung des oberen Randes der Lagerschale vor der Montage zur Veranschaulichung der Rippen und Nuten im vergrösserten Massstab;

Fig. 8 einen Abschnitt einer Abwicklung des oberen Randes der Lagerschale nach der Montage zur Veranschaulichung der elastischen Verformung der Rippen in vergrössertem Massstab;

Fig. 9 ein Diagramm mit einer Federkennlinie für die mit den Rippen und Nuten versehene Lagerschale.

In einem Gelenkgehäuse 1 ist ein Kugelzapfen 2 mit einem Kugelkopf 3 unter Zwischenlage einer Lagerschale 4 aus elastischem Material angeordnet. An seiner Oberseite ist das Kugelgelenk mit einer eingewalzten Kappe 6 verschlossen, unter der ein Fettreservoir 7 liegt.

Die Lagerschale 4 kann auch aus zwei halbsphärisch ausgebildeten Lagerschalenhälften bestehen, die in der Ebene des Äquators 8 stumpf aufeinanderstossen. Die äussere Lagerschale besteht dann aus einem hartelastischen Kunststoff, beispielsweise Polyoxymethylen (POM). Die innenliegende Lagerschale 4 besteht aber in der Regel aus einem weichelastischen Kunststoff, beispielsweise Polyurethan (PUR).

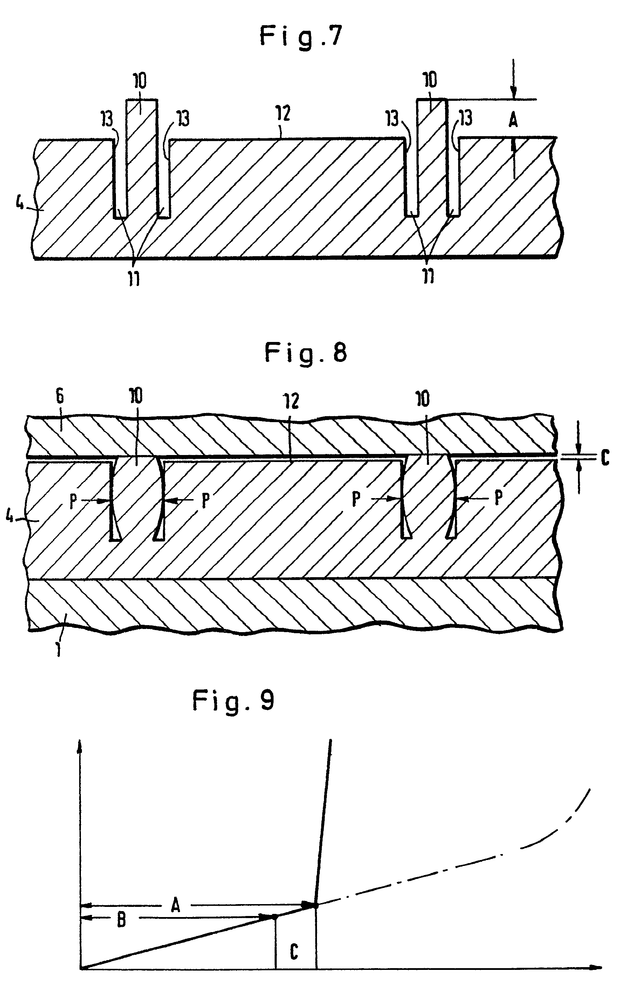

Die Lagerschale 4 ist an ihrer innenliegenden Stirnfläche 9 mit radial verlaufenden Rippen 10 versehen, die durch Nuten 11 von den Anschlagflächen 12 getrennt sind. Die Volumina der Rippen und der Nuten sind so aufeinander abgestimmt, dass im nicht montierten Zustand (Fig. 7) etwa ein Drittel der Rippen 10 die Anschlagflächen 12 überragt und im montierten Zustand (Fig. 8) die Nuten 11 praktisch ausfüllt.

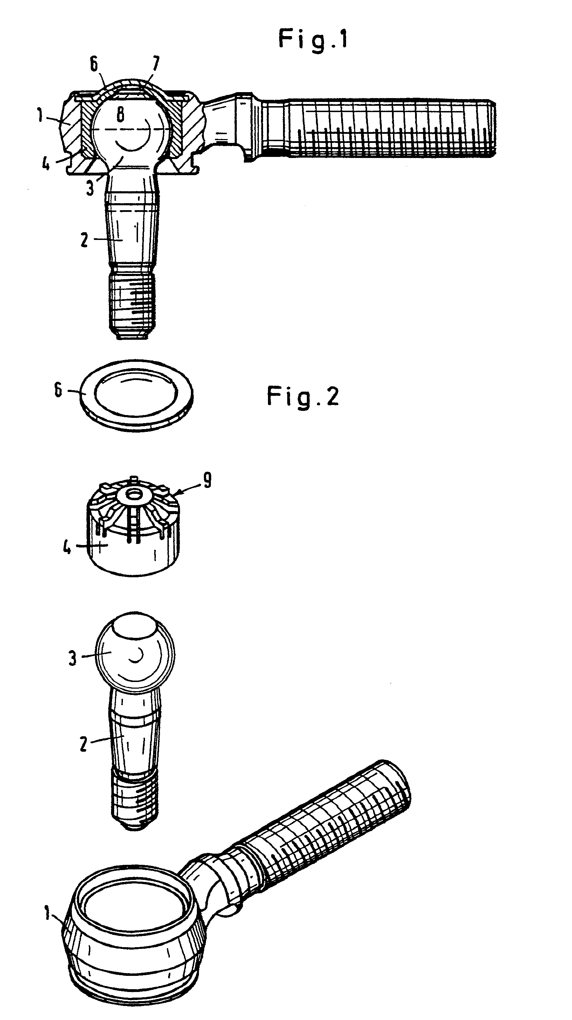

Bei der Montage des Kugelgelenkes, wie sie im Sprengbild der Fig. 2 schematisch dargestellt worden ist, kommen zunächst nur die Rippen 10 mit der Kappe 6 in Kontakt. Beim Einwalzen der Kappe 6 werden die Rippen 10 teilweise elastisch verformt, um Fertigungstoleranzen des Gelenkgehäuses 1 auszugleichen und das gewünschte Kipp- oder Drehmoment einzustellen. Dabei werden die Rippen 10 auf dem Federweg B vorgespannt. Danach stützen sich die Rippen 10 an den Seitenwänden 13 der Nuten 11 mit einer Stützkraft P ab. Erst wenn der danach für den Fahrbetrieb noch zur Verfügung stehende Federweg C bei grossen Stossbelastungen verbraucht wird, kommt die Kappe 6 an den Anschlagflächen 12 zur Anlage, so dass die Federkennlinie (Fig. 9) nach Erschöpfung des gesamten Federweges A steil ansteigt.

Bei einem nach dieser technischen Lehre ausgebildeten Kugelgelenk steht ein verhältnismässig grosser Federweg B zum Ausgleich der Fertigungstoleranzen zur Verfügung und gleichzeitig kann ohne plastische Verformung der Rippen 10 bei weiter linear ansteigender Federkraft ein Federweg C ausgenutzt werden, um axiale Stossbelastungen aufzufangen, bevor der gesamte Federweg A erschöpft ist und die Anschlagflächen 12 eine plastische Verformung der Rippen 10 verhindern.

## Patentansprüche

1. Kugelgelenk für Kraftfahrzeuge mit einer zwischen einem Gelenkgehäuse (1) und einem Kugelkopf (3) angeordneten Lagerschale (4), die an einer Stirnseite mit aus einer Anschlagfläche (12) herausragenden, elastisch verformbaren Erhebungen versehen ist, dadurch gekennzeichnet, dass die Erhebungen als radial verlaufende, quaderförmige Rippen (10) ausgebildet sind, dass die Rippen (10) durch an ihre Seitenwände angrenzenden Nuten (11) von den Anschlagflächen (12) beabstandet sind und dass das die Anschlagflächen überragende Volumen jeder Rippe (10) vor der Montage annähernd gleich dem freien Volumen der beiden ihr zugeordneten Nuten (11) ist, so dass die den Anschlagflächen benachbarten Seitenwände der Nuten (11) im montierten Zustand als Stützwände (13) für die elastisch verformten Rippen (10) wirksam sind.

2. Kugelgelenk nach Anspruch 1, dadurch gekennzeichnet, dass das Volumen der Rippen (10) vor der Montage zu einem Drittel oberhalb und zu zwei Dritteln unterhalb der Ebene der Anschlagflächen (12) liegt.

3. Kugelgelenk nach den Ansprüchen 1 und 2, dadurch gekennzeichnet, dass die Rippen (10) im montierten Zustand die Ebene der Anschlagflächen (12) noch mit ca. 10% ihres elastisch verformbaren Volumens überragen.

## Claims

1. A ball-and-socket joint for motor vehicles with a bearing shell (4) disposed between a joint housing (1) and a ball head (3), which bearing shell is provided at a front face with elastically deformable raised portions protruding out of a stop face (12), characterised in that the raised portions are formed as radially-extending foursided ribs (10), in that the ribs (10) are spaced from the stop faces (12) by grooves (11) adjoining their side walls, and in that the volume of each rib (10) protruding above the stop faces before assembly is substantially equal to the free volume of its grooves (11) so that the side walls of the grooves (11) adjacent the stop faces are, in the assembled condition, effective as supporting walls (13) for the elastically deformed ribs (10).

2. A ball-and-socket joint according to claim 1, characterised in that the volume of the ribs (10) before assembly lies by one third above, and by two thirds below, the plane of the stop faces (12).

3. A ball-and-socket joint according to claims 1 and 2, characterised in that the ribs (10) in the assembled condition still protrude by about 10% of their elastically deformable volume over the plane of the stop faces (12).

## Revendications

1. Articulation à rotule pour véhicule automobile comportant un coussinet (4) disposé entre un carter d'articulation (1) et une tête de rotule (3) et qui est muni, sur une face frontale, de bosses dépassant d'une face de butée (12) et déformable élastiquement, caractérisée en ce que les bosses sont réalisées sous la forme de côtes (10) s'étendant radialement et parallélépipédiques, en ce que les côtes (10) sont séparées des faces de butée (12) au moyen d'encoches voisines de leurs parois latérales et en ce que le volume de chaque côte (10) dépassant les faces de butée avant le montage est approximativement égal au volume libre des encoches (11) qui lui sont adjointes si bien que les parois latérales des encoches (11) qui sont voisines des faces de butée sont, à l'état monté, efficaces en tant que parois d'appui (13) pour les côtes (10) déformées élastiquement.

2. Articulation à rotule selon la revendication 1, caractérisée en ce que le volume des côtes (10) avant le montage se trouve pour un tiers au-dessus et pour deux tiers en dessous du plan des faces de butée (12).

3. Articulation à rotule selon les revendications 1 et 2, caractérisée en ce que les côtes (10) dépassent, à l'état monté, le plan des faces d'appui (12) encore d'environ 10% de leur volume déformable élastiquement.

# Fig.1

# Fig.2

Fig.3

Fig.4

Fig.5

Fig.6

Fig. 7

Fig. 8

Fig. 9